# EUROPEAN PATENT SPECIFICATION

(11) **EP 1 700 789 B1**
(45) Date of publication and mention of the grant of the patent: **29.08.2007**
(21) Application number: 03785969.1
(22) Date of filing: 18.12.2003
(51) Int. Cl.: B65D 30/22, A23L 1/32

(54) **EGG-PRODUCT-PREPARATION ASSEMBLY**
EIERPRODUKTZUBEREITUNGSANORDNUNG
ENSEMBLE DE PREPARATION D'UN OVOPRODUIT

(43) Date of publication of application: 13.09.2006
(73) Proprietor: Huevos Maryper, S.A., 30850 Totana (Murcia) (ES)
(72) Inventor: MARTINEZ NAVARROP, Gabriel, 30850 Totana (ES)
(74) Representative: Primo de Rivera y Urquijo, Jose A.
(86) International application number: PCT/ES2003/000647
(87) International publication number: WO 2005/061341

(56) References cited:
- EP-A2- 1 201 562
- ES-A1- 2 156 562
- GB-A- 1 253 271
- GB-A- 2 227 004

## Description

The present invention relates to an assembly for the preparation of an egg-product from dried egg, simplifying and facilitating said preparation whilst at the same time guaranteeing optimal hygiene conditions.

### BACKGROUND TO THE INVENTION

Containers are known in the state of the art which are intended for products of various components which must be maintained separated during their storage and are mixed only when they are to be used; examples of these products are some medicines and adhesive products. ES2156562 relates to package for pulverulent egg preparations, package being intended to the preparation of egg-based food products without having to manipulate fresh eggs. The container must be opened and filled with water prior to shaking for reconstituting the egg product.

Some of these containers are made up of two sheets of flexible material, welded together at their perimeter such that they form a bag or envelope, inside of which are defined two or more compartments for the different products on the basis of carrying out frangible weld seams between the two sheets. The welds separating some compartments from others can be broken when the user desires for mixing the components and using the resulting mixture.

On the other hand, it is known that the use of dried egg has a series of advantages with respect to fresh egg, generally relating to hygiene and the simplicity of storage and transport; it further has a health guarantee as it is pasteurized, thus assuring the absence of biological or physico-chemical parameters, such as salmonella.

However, it is desirable to improve dried egg handling comfort for the users, particularly in those cases where preparing an egg-product such as an omelette or the like is desired.

### DESCRIPTION OF THE INVENTION

An objective of the present invention is to provide an assembly facilitating the preparation of an egg-product from dried egg.

According to this objective, the present invention relates to an assembly for the preparation of an egg-product, comprising dried egg and a container which is designed to house said dried egg until it is to be used, characterized by the fact that said container comprises a bag having at least two compartments which are separated from each other by a pressure-breakable welded seam, a pre-determined quantity of dried egg being housed in one compartment, and a pre-determined quantity of water being housed in the other compartment.

These features allow all the necessary ingredients for preparing an egg-product, such as an omelette, to be stored and transported jointly and safely, and it further prevents having to measure or weigh the quantities of each ingredient. The mixed egg is perfectly homogenized without lumps.

Another considerable advantage of its use is that it is very clean, given that the egg-product ingredients can be mixed together in a few seconds inside the container before opening it, in an aseptic way without needing utensils or auxiliary containers, assuring its health safety. The preservation and non-contamination can be assured even after preparing the mixture as there is no contact with the outside air at any time.

The invention allows providing egg so as to prepare an egg-product in containers of very few units, even unitary containers, preventing all the problems of fragility of the egg with a shell, the need for refrigeration, the risk of salmonella, the duration (long life: over two years), hygiene, etc.

Being able to maintain it at room temperature simplifies and reduces the logistics costs during the marketing of the product; and the fact that it comprises all the ingredients and requires no auxiliary utensils for the preparation of an egg-product makes its use especially convenient on excursions and in similar situations.

The packaging of the water together with the dried egg further allows controlling the water; this is important because water is not the same in all countries. As it depends greatly on the properties of the water, the preparation does not mix the same, and the final properties of the product are not the same. Depending on the hardness of the water, an omelette can turn out runny or a mayonnaise may not whip. With the assembly according to the invention, it is assured that the user uses controlled water for the preparation of an egg-product allowing an optimal mixture. Furthermore, since the water is controlled, non-contamination of the final product is assured.

In a preferred embodiment, said bag is formed by at least one sheet of flexible material.

The flexibility of the container is very useful in that it facilitates the pressure-breaking of the frangible weld and allows the container to swell when the egg has fermented, such that it allows one to know if there has been a packaging defect or if it has been mixed by mistake such that it is not fit for consumption.

Preferably, said sheet is heat-welded along at least one part of the perimeter of the bag.

According to an embodiment, said sheet of flexible material is formed by a laminate comprising at least one layer of polyester barrier which is on the outer face of the bag and at least one layer of peelable polyethylene on the inner face of the bag.

The layer of polyester barrier serves for keeping the product in perfect condition, preventing any contamination until it is to be consumed. The layer of polyester barrier also serves for being able to substitute air with a modified atmosphere to prevent the oxidation of the product and to increase its life.

Preferably the sheet comprises an inner layer and an intermediate layer of polyester barrier, said intermediate layer having a ceramic coating applied thereto.

The ceramic coating considerably improves the properties of the polyester barrier.

In an embodiment, at least one part of said sheet is transparent; it can therefore be seen before opening the bag if the components have mixed together.

Preferably the dried egg is mixed with a proportion of at least one component selected from yolk, starch, bicarbonate and an anti-caking agent, or a mixture thereof. The quality of the product is thus equaled or improved with respect to fresh egg and it achieves greater emulsion, that it mixes instantaneously and that it binds with other products.

Further, a compartment of the bag can comprise additional ingredients for the egg-product preparation.

In an embodiment, said additional ingredients are housed in the same compartment as the dried egg.

The bag can have a scale on its outer surface; the scale allows seeing the quantity of egg remaining in the container after carrying out the mixing and using a part of the contents.

### BRIEF DESCRIPTION OF THE DRAWINGS

For a greater understanding of that set out hereinbefore a set of drawings are attached in which a practical embodiment is represented schematically and only by way of a non-limiting example.

In the drawings:
Figure 1 shows a schematic plan view representing an embodiment of an assembly according to the invention for the egg-product preparation;
Figure 2 shows a sectional view of the assembly of Figure 1; and
Figure 3 shows a view similar to that of Figure 2, once the breakable weld of the container has been opened and its components have been mixed.

### DESCRIPTION OF PREFERRED EMBODIMENTS

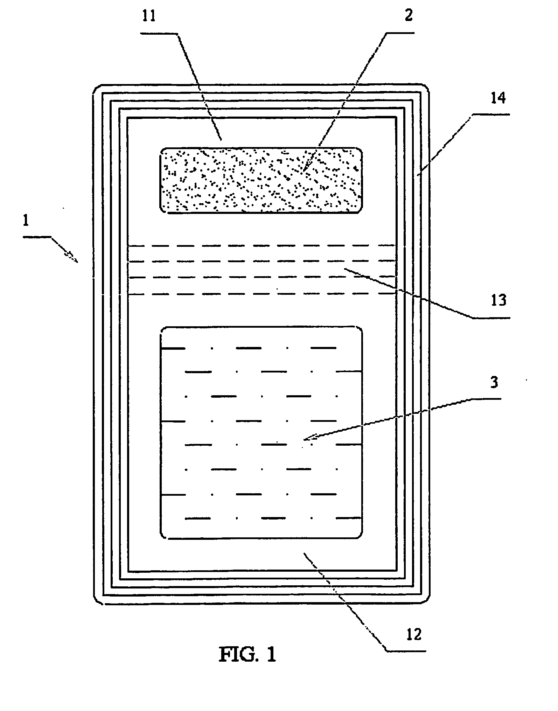

In the embodiment represented in Figure 1, the assembly for preparing an egg-product consists of a container 1, a certain quantity of dried egg 2 and a certain quantity of water 3, suitable for being mixed with the quantity of dried egg 2 to obtain liquid egg with a suitable proportion of the components. This liquid egg can then be used for preparing the desired egg-product.

The egg-product to be prepared can be an omelette, for example, but also other products using liquid egg, such as batters and the like.

The container 1 herein is a rectangular bag divided into two compartments 11 and 12 by means of a heat weld 13 which is peelable or breakable, i.e. it can be opened by exerting certain force on it.

The compartments 11 and 12 are designed to house respectively the quantities of dried egg 2 and water 3 so that they are maintained separated until the moment of preparation of the egg-product.

The bag 1 is manufactured with two sheets of a composite plastic material, these being welded to each other around the entire perimeter 14 of the bag, or by a sheet which is folded and welded on three of its sides.

It must be pointed out that these perimeter welds of the bag, also carried out by heat welding, preventing the contamination of the product, have a much higher resistance than that of weld 13, as they must not open at the same time but must be maintained sealed for isolating the contents of the container from the outside.

As has been represented in Figure 1, some parts of the bag 1 are transparent for allowing the visualization of the contents of each compartment and verifying their condition before opening it.

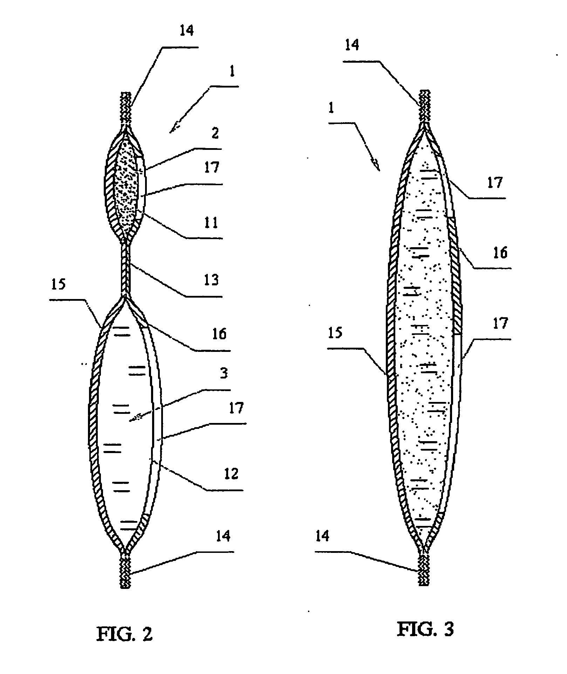

Figure 2 shows a section of the bag of Figure 1 with its compartments 11 and 12 and their respective contents of dried egg 2 and water 3. It must be pointed out that in Figure 2 the thickness of the sheets 15, 16 forming the bag has been exaggerated so as to facilitate understanding of the drawing; on the right part of the figure the transparent parts 17 allowing visualization of the contents in the two compartments 11 and 12 can be seen.

When a user wishes to prepare an omelette or other product, he must simply press on compartment 12 with his hand, so that the water 3 housed in this compartment exerts force on the weld 13 and opens it, such that the compartments 11 and 12 merge together and the quantities of egg and water are mixed, as shown in Figure 3, while the bag is maintained sealed from the outside.

After lightly shaking the bag to homogenize the content, in a completely clean manner and without needing to use any container or utensil, the bag 1 can be opened and the liquid egg obtained can be poured, for example, directly into a frying pan.

The bag can optionally incorporate any means for facilitating its opening, for pouring the product, for closing the bag again if all the liquid egg is not used, etc.

Furthermore, a scale can be represented on the outer surface of the bag which allows evaluating the quantity of liquid egg remaining in the bag after using one part.

The dried egg 2 can be accompanied, among others, by one or several of the following products: yolk, starch, bicarbonate and an anti-caking agent.

Furthermore, other ingredients can be included for the egg-product to be prepared in the same compartment or in another separate compartment: for example, dried onion and potato can be included as additional ingredients for preparing an omelette.

As regards the bag 1, a suitable material for its embodiment is a sheet of transparent plastic material, made up of an inner layer of peelable and weldable polyethylene (PE) and an outer layer of polyester (PET) of about 12 µ with barrier properties, forming a sheet with a total grammage of about 85 g/cm². The polyester can include two layers; in this case, the layer which is in the middle can have a ceramic coating of very low thickness, considerably improving the barrier properties to water vapor and which is applied independently from the laminating process. Desired graphic images can be printed on the outer layer of polyester.

The polyethylene which makes up the inner layer is manufactured with a three layer coextrusion based on the mixture of polyethylene with copolymers. It has a different behavior in the weld depending on the temperature applied: with a low-temperature weld a peelable or frangible weld is obtained, such as weld 13 separating the two compartments of the bag, whereas at high temperatures the material loses the properties of peelability and the weld is destructive, such that the welds in the perimeter 14 of the bag can have a much higher resistance than that of the frangible weld 13.

The packaging of the dried egg and water can be carried out with modified atmosphere (nitrogen and CO₂), without the presence of oxygen so as to increase the durability of the egg, by means of powder, liquid nitrogen and CO₂ metering devices

Although a specific embodiment of the present invention has been described, a skilled person in the art can introduce variants and substitute some elements for others which are technically equivalent, depending on the requirements of each case and without departing from the scope of protection defined in the claims attached.

For example, although a bag having two compartments and two components has been described, the assembly could include other components for the egg-product preparation, for example salt, oil or another type of fat, and the container can include additional compartments, both separated from others by frangible welds and isolated in a more permanent way.

## Claims

1. An assembly for the preparation of an egg-product comprising dried egg (2) and a container (1) which is designed to house said dried egg (2) until it is to be used, **characterized by** the fact that said container comprises a bag (1) having at least two compartments (11, 12) which are separated from one another by means of a pressure-breakable welded seam (13), a pre-determined quantity of dried egg (2) being housed in one compartment (11),and a pre-determined quantity of water (3) being housed in another compartment (12).

2. An assembly according to claim 1, **characterized by** the fact that said bag (1) is formed by at least one sheet (15, 16) of flexible material.

3. An assembly according to claim 2, **characterized by** the fact that said sheet (15, 16) is heat-welded throughout at least one part of the perimeter (14) of the bag (1).

4. An assembly according to claims 2 or 3, **characterized by** the fact that said sheet (15, 16) of flexible material is formed by a laminate comprising at least one layer of polyester barrier which is on the outer face of the bag (1) and at least one layer of peelable polyethylene which is on the inner face of the bag (1).

5. An assembly according to claim 4, **characterized by** the fact that the sheet (15, 16) comprises an inner layer and an intermediate layer of polyester barrier, said intermediate layer having a ceramic coating applied thereto.

6. An assembly according to any of claims 2 to 5, **characterized by** the fact that at least one part (17) of said sheet (15, 16) is transparent.

7. An assembly according to any of the previous claims, **characterized by** the fact that the dried egg (2) is mixed with a proportion of at least one component selected from yolk, starch, bicarbonate and an anti-caking agent, or a mixture thereof.

8. An assembly according to the previous claims, **characterized by** the fact that a compartment (11) of the bag (1) comprises additional ingredients for the preparation of the egg-product.

9. An assembly according to claim 8, **characterized by** the fact that said additional ingredients are housed in the same compartment (11) as the dried egg (2)

10. An assembly according to any of the previous claims, **characterized by** the fact that the bag (1) has a scale represented on its outer surface.

## Patentansprüche

1. Anordnung für die Zubereitung eines Eiproduktes, die Trockenei (2) und einen Behälter (1) umfasst, der für die Aufnahme dieses Trockeneis (2) vorgesehen ist, bis dieses verwendet wird, **dadurch gekennzeichnet, dass** der Behälter einen mindestens zwei Kammern (11, 12) auf weisenden Beutel (1) umfasst, die durch eine unter Druck zerbrechliche Schweißnaht (13) voneinander getrennt sind, wobei eine vorgegebene Menge Trockenei (2) in einer Kammer (11) untergebracht ist, und eine vorgegebene Menge Wasser (3) in einer anderen Kammer (12) untergebracht ist.

2. Anordnung nach Anspruch 1, **dadurch gekennzeichnet, dass** der Beutel (1) aus mindestens einer aus flexiblem Material bestehenden Folie (15, 16) ausgebildet ist.

3. Anordnung nach Anspruch 2, **dadurch gekennzeichnet, dass** die Folie (15, 16) in mindestens einem Teil des Umfanges (14) des Beutels (1) durchgehend warmgeschweißt ist.

4. Anordnung nach den Ansprüchen 2 oder 3, **dadurch gekennzeichnet, dass** die Folie (15, 16) aus flexiblem Material aus einem folienartigen Material ausgebildet ist, die mindestens eine Barriereschicht aus Polyester an der Außenseite des Beutels (1) und mindestens eine abschälbare Polyethylenschicht an der Innenseite des Beutels (1) umfasst.

5. Anordnung nach Anspruch 4, **dadurch gekennzeichnet, dass** die Folie (15, 16) eine Innenschicht und eine Zwischenschicht aus Polyesterbarriere umfasst, wobei die Zwischenschicht eine auf dieser Zwischenschicht aufgetragene Keramikschicht aufweist.

6. Anordnung nach einem der Ansprüche 2 bis 5, **dadurch gekennzeichnet, dass** mindestes ein Teil (17) dieser Folie (15, 16) transparent ist.

7. Anordnung nach einem der vorangehenden Ansprüche, **dadurch gekennzeichnet, dass** das Trockenei (2) mit einem Anteil mindestens einer Zutat, die aus Eigelb, Speisestärke, Bicarbonat und Trennmittel, oder eine Mischung derselben besteht, gemischt wird.

8. Anordnung nach den vorangehenden Ansprüchen, **dadurch gekennzeichnet, dass** eine Kammer (11) des Beutels (1) weitere Zutaten für die Zubereitung des Eiprodukts umfasst.

9. Anordnung nach Anspruch 8, **dadurch gekennzeichnet, dass** diese weiteren Zutaten in der gleichen Kammer (11) wie das Trockenei (2) untergebracht sind.

10. Anordnung nach einem der vorangehenden Ansprüche, **dadurch gekennzeichnet, dass** auf der äußeren Oberfläche des Beutel (1) ein Maßstab dargestellt ist.

## Revendications

1. Ensemble pour la préparation d'un ovoproduit comprenant de l'oeuf (2) desséché et un conteneur (1) qui est conçu pour loger ledit oeuf (2) desséché jusqu'à son utilisation, **caractérisé en ce que** le dit conteneur comprend un sac (1) ayant au moins deux compartiments (11, 12) qui sont séparés l'un de l'autre au moyen d'une couture (13) soudée qui peut se briser par pression, une quantité prédéterminée d'oeuf (2) desséché étant logée dans un compartiment (11), et une quantité prédéterminée d'eau (3) étant logée dans un autre compartiment (12).

2. Ensemble selon la revendication 1, **caractérisé en ce que** ledit sac (1) est formé par au moins une lame (15, 16) de matière flexible.

3. Ensemble selon la revendication 2, **caractérisé en ce que** ladite lame (15, 16) est soudée à chaud sur au moins une partie du périmètre (14) du sac (1).

4. Ensemble selon les revendications 2 ou 3, **caractérisé en ce que** ladite lame (15, 16) de matière flexible est formée par une matière laminaire comprenant au moins une couche barrière en polyester qui est sur la face extérieure du sac (1) et au moins une couche de polyéthylène libérable qui est sur la face intérieure du sac (1).

5. Ensemble selon la revendication 4, **caractérisé en ce que** la lame (15, 16) comprend une couche intérieure et une couche intermédiaire barrière en polyester, ladite couche intermédiaire présentant un recouvrement céramique appliqué à celle-ci.

6. Ensemble selon l'une quelconque des revendications 2 à 5, **caractérisé en ce qu'**au moins une partie (17) de ladite lame (15, 16) est transparente.

7. Ensemble selon l'une quelconque des revendications antérieures, **caractérisé en ce que** l'oeuf (2) desséché est mélangé dans une proportion d'au moins un composant sélectionné de jaune d'oeuf, amidon, bicarbonate et un agent anti-agglomérant, ou un mélange de ceux-ci.

8. Ensemble selon les revendications antérieures, **caractérisé en ce qu'**un compartiment (11) du sac (1) comprend des ingrédients additionnels pour la préparation de l'ovoproduit.

9. Ensemble selon la revendication 8, **caractérisé en ce que** lesdits ingrédients additionnels sont logés dans le même compartiment (11) que l'oeuf (2) desséché.

10. Ensemble selon l'une quelconque des revendications antérieures, **caractérisé en ce que** le sac (1) a une échelle représentée sur sa surface extérieure.
